# FASCICULE DE BREVET EUROPEEN

(11) **EP 2 005 853 B1**
(45) Date de publication et mention de la délivrance du brevet: **02.03.2011**
(21) Numéro de dépôt: 08158492.2
(22) Date de dépôt: 18.06.2008
(51) Int. Cl.: A44B 19/64, B29D 5/00, B31B 19/90, B65D 33/25

(54) **Chaîne de curseurs**
Schieberkette
Slider chain

(30) Priorité: 21.06.2007 FR 0755918
(43) Date de publication de la demande: 24.12.2008
(73) Titulaire: S2F FLEXICO, 60119 Henonville (FR)
(72) Inventeur: Roger, Antony, 78500 Sartouville (FR); Barreaux, Michel, 60119 Henonville (FR)
(74) Mandataire: Texier, Christian

(56) Documents cités:
- WO-A-00/67602
- FR-A- 2 076 728
- GB-A- 1 432 330
- GB-A- 1 454 147
- US-B1- 6 609 353

## Description

L'invention concerne le domaine des chaînes de curseurs destinés à être montés sur des ensembles de fermeture, par exemple pour sachets, et plus particulièrement les languettes de liaison conçues pour interconnecter des chaînes de curseurs deux à deux afin de former une chaîne de curseurs globale plus longue, pour des applications industrielles.

De telles chaînes de curseurs sont, de manière connue, composées d'une pluralité de curseurs reliés entre eux par des pontets sécables. Mais étant réalisées par moulage en matières plastiques, les chaînes ne peuvent comporter généralement que quelques dizaines de curseurs au maximum, la technique de moulage par injection ne permettant pas en soi la fabrication de chaînes plus longues en continu.

Il a donc été nécessaire, en vue d'applications industrielles, de trouver un moyen pour interconnecter des chaînes de curseurs entre elles, et ce de manière suffisamment souple pour pouvoir utiliser les chaînes de curseurs ainsi obtenues dans des machines de pose de curseurs en automatique.

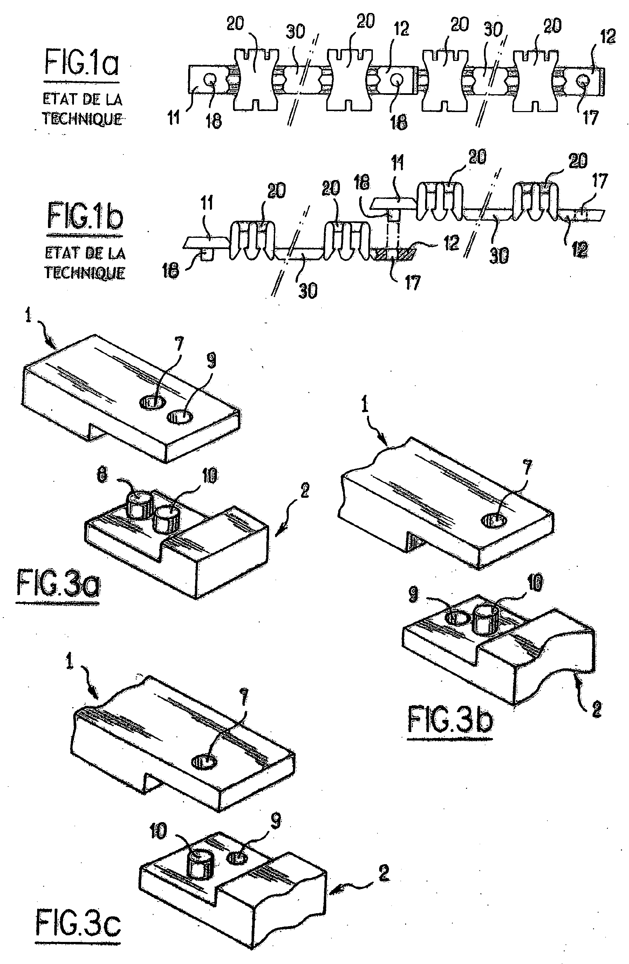

Le brevet français n°70 02667 décrit par exemple des chaînes de curseurs obtenues par injection moulage, et adaptées pour être réunies entre elles au niveau de leurs extrémités par des languettes de liaison 11 et 12, comme illustré sur les figures 1 a et 1b annexées. Les languettes de liaison 11 et 12 comportent respectivement un picot 18 et un orifice 17. Par leur emboîtement mutuel, ils forment un point d'attache entre deux chaînes consécutives. On peut ainsi obtenir une chaîne globale plus longue.

Ce procédé d'interconnexion présente toutefois l'inconvénient de ne pas empêcher les mouvements de rotation relative des chaînes autours de leur point d'attache. Or, le pivotement relatif des chaînes au cours de leur acheminement vers un dispositif de pose de curseurs, peut gêner, empêcher ou même fausser la pose des curseurs en automatique. Cela implique donc inévitablement l'arrêt momentané du dispositif de pose (voir de la machine globale comprenant le dispositif de pose), ou du moins le ralentissement de la cadence de production, afin que le redressement des chaînes puisse être effectué.

De telles manipulations augmentent inévitablement le coût de fabrications des produits finaux.

Par ailleurs, les languettes de liaison, une fois assemblées, ont une épaisseur environ deux fois plus importante que les pontets sécables internes à une chaîne. Et cette surépaisseur peut notamment poser des problèmes lors du passage des chaînes dans les dispositifs de pose de curseurs.

Le document WO 00/67602 décrit une chaîne de curseurs comprenant une pluralité de curseurs emboîtés mécaniquement.

Par ailleurs, le document US 6 609 353 décrit une chaîne de curseurs comprenant une pluralité de curseurs reliés entre eux par des pontets et comprenant à chaque extrémité un dispositif de liaison pour interconnecter l'extrémité de deux chaînes consécutives pour former une chaîne globale plus longue.

Un objet de l'invention est de proposer un nouveau dispositif de liaison pour interconnecter l'extrémité de deux chaînes de curseurs, de manière à pouvoir assembler consécutivement plusieurs chaînes de curseurs pour former une chaîne de curseurs plus longue.

Un autre objet de l'invention est de proposer un dispositif de liaison pour interconnecter l'extrémité de deux chaînes de curseurs empêchant les mouvements de rotation relatifs desdites chaînes.

Un autre objectif de l'invention est de proposer un dispositif de liaison pour interconnecter l'extrémité de deux chaînes de curseurs obtenues par moulage.

Un autre objectif de l'invention est de proposer un dispositif de liaison pour interconnecter l'extrémité de deux chaînes de curseurs dont l'épaisseur globale est sensiblement la même que l'épaisseur des pontets sécables internes aux chaînes.

Un autre objectif de l'invention est de proposer un dispositif de liaison pour interconnecter l'extrémité de deux chaînes de curseurs obtenues par injection moulage.

Enfin, un objet de l'invention est de proposer un ensemble de chaînes de curseurs, comprenant plusieurs chaînes de curseurs dont les extrémités sont interconnectées au moyen d'un dispositif de liaison, dont l'utilisation dans un dispositif de pose de curseur en automatique pose moins de problèmes que les chaînes conventionnelles.

Pour cela, l'invention propose une chaîne de curseurs comprenant une pluralité de curseurs reliés entre eux par des pontets sécables, et comprenant à chaque extrémité un dispositif de liaison pour interconnecter l'extrémité de deux chaînes de curseurs pour former une chaîne globale plus longue, caractérisée en ce que les dispositifs de liaison sont deux languettes de forme complémentaire, disposées respectivement sur des extrémités, et comprennant des moyens d'attache non cylindriques de révolution.

Selon un deuxième aspect, l'invention propose également un ensemble comprenant une pluralité de chaînes de curseurs interconnectées entre elles au moyen d'un dispositif de liaison selon l'invention comprenant des moyens d'attache non cylindriques de révolution.

L'invention sera mieux comprise à la lecture de la description détaillée qui va suivre, faite en référence aux dessins annexés sur lesquels :
- Les figures 1 a et 1b montrent en plan et en élévation deux chaînes de curseurs, chacune comprenant plusieurs curseurs, interconnectées entre elles au niveau de leurs extrémités par des languettes de liaison selon l'art antérieur,
- La figure 2 est une vue schématique en perspective d'une machine de fabrication de sachets susceptible d'utiliser un dispositif de liaison conforme à la présente invention,
- Les figures 3 à 8 illustrent en élévation des réalisations de deux languettes de liaison complémentaires d'une chaîne de curseurs selon l'invention.

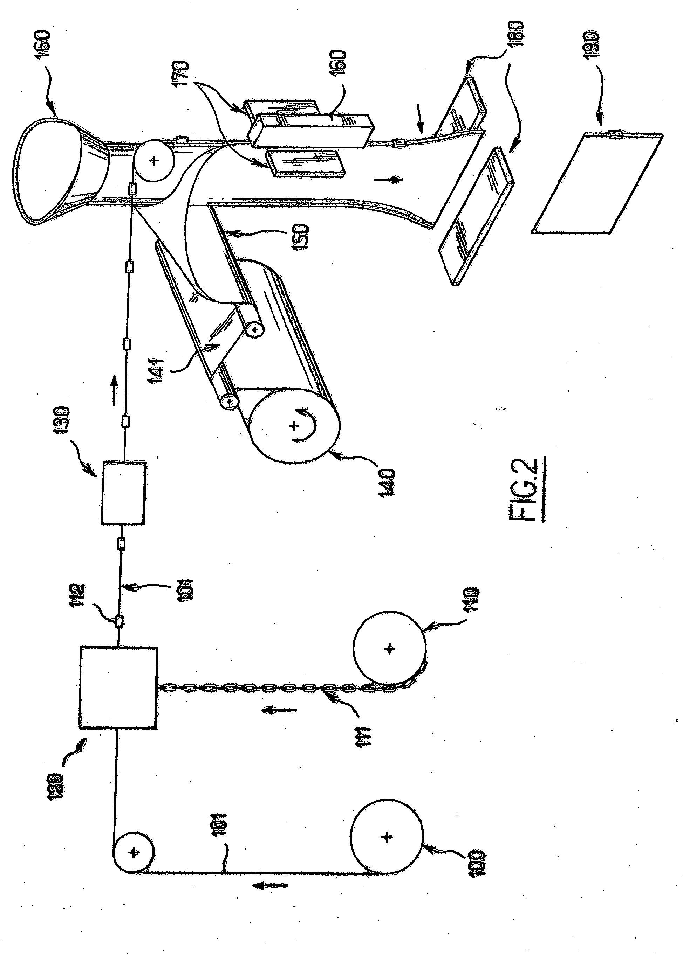

L'invention s'applique en particulier à la fabrication de sachets, notamment mais non exclusivement sur une machine automatique de fabrication, remplissage et fermeture de sachets comme schématisé sur la figure 2. Une telle machine comprend :
- des moyens 100 d'approvisionnement d'une bande de profilés de fermeture 101,
- des moyens 110 d'approvisionnement de chaînes 111 de curseurs 112,
- un poste 120, comprenant un dispositif de pose de curseurs 112, destiné à opérer séquentiellement la pose individuelle de chaque curseur 112 sur ladite bande 101,
- un poste 130 destiné à assurer la « fermeture des bandes 101 », c'est-à-dire l'engagement des deux profilés de la bande de fermeture 101, après pose des curseurs 112,
- des moyens 140 d'approvisionnement d'un film thermoplastique 141,
- un col de formage 150, associé à une goulotte de remplissage 160, qui conforme le film 141 à partir d'un état initial plan, en un tube,
- un positionneur 160 de la bande de fermeture 101 par rapport aux bords longitudinaux adjacents du film 141, associé à des mâchoires de soudure longitudinale 170, et
- des mâchoires de soudure transversale 180 associées à des moyens de coupe.

La figure 2 annexée illustre une telle machine, dans laquelle la bande de fermeture 101 est posée longitudinalement sur les bords du film 141, c'est-à-dire parallèlement à la direction de déplacement du film 141. En variante, la bande de fermeture 101 peut être déposée transversalement sur le film 141, c'est-à-dire sensiblement perpendiculairement à la direction de déplacement du film 141.

L'invention s'applique à tous types de bandes de fermeture 101 (notamment les bandes de fermeture comprenant deux profilés mâle et femelle complémentaires, des profilés en crochet, des profilés reliés entre eux par une bande de liaison en U pour former un témoin d'ouverture, etc...).

L'invention s'applique également à la fabrication de sachets 190 vides destinés à un remplissage ultérieur, ou à la préparation de bandes de fermeture 101 pré-équipées de curseurs, en vue de la fabrication ultérieure de sachets 190 munis de telles bandes de fermeture 101.

Par ailleurs, le dispositif 110 de pose de curseurs 112 est conçu pour poser les curseurs 112 sur la bande de profilés de fermeture 101, quel que soit le type de machine de conformation du film 141 utilisé, et que la soudure ait lieu avant ou après la pose des curseurs.
Ainsi, l'invention concerne une chaîne de curseurs notamment mais non exclusivement pour la fabrication de sachets thermoplastiques à ouvertures multiples, comportant deux bandes de profilés de fermeture complémentaires.

Une chaîne de curseurs 111 comprend généralement une pluralité de curseurs 112, reliés entre eux par des pontets sécables 30 conventionnels.

Les pontets sécables 30 sont connus de l'Homme du métier et ne seront pas davantage décrits.

Chaque chaîne 111, selon l'invention, porte à chacune de ses extrémités une languette de liaison (ou d'interconnexion) 1, 2. Cette languette 1, 2 est sécable, au même titre que les pontets 30 internes à ladite chaîne 111, pour permettre à un dispositif 120 de pose de curseurs 112 de séparer le curseur extrême d'une chaîne (et du reste de la chaîne de curseurs), et de le poser sur une bande de fermeture 101.

De préférence, les curseurs 112, les pontets 30 et les languettes 1, 2 sont réalisés en POM (Polyoxyméthylène) ou en polyolèfines, tel que polyéthylène haute et basse densité, polypropylène....

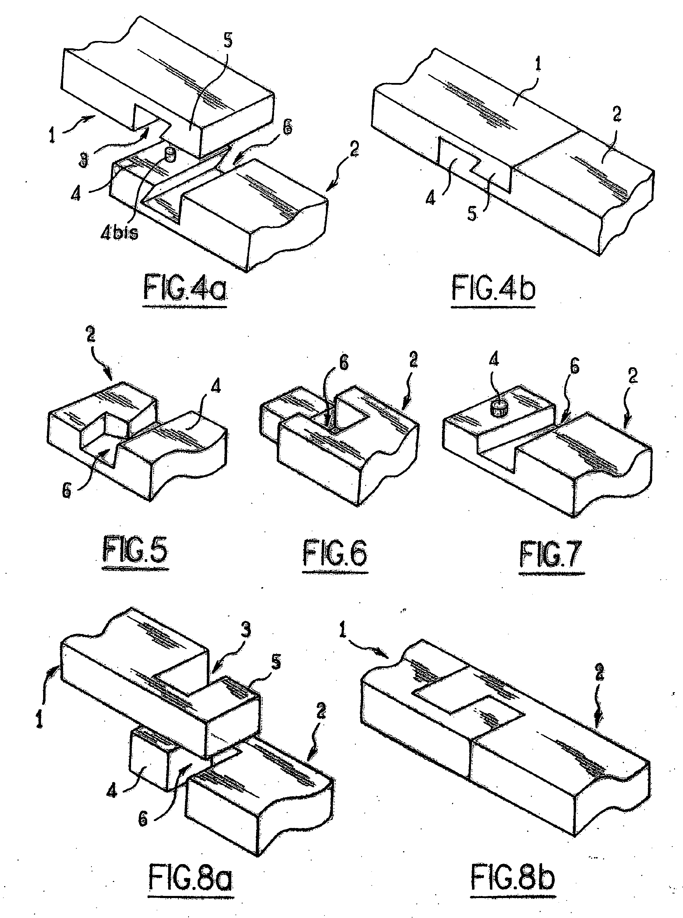

Afin que l'interconnexion créée par la liaison de deux languettes 1 et 2 ne conduise pas à une épaisseur plus grande que celle d'un pontet sécable 30 interne à la chaîne 111, les languettes extrêmes 1 et 2 ont de préférence une épaisseur deux fois plus faible que celle d'un pontet 30 interne à la chaîne, ou sont configurées sous forme de nervures/rainures complémentaires (voir des exemples sur les figures 4 à 8 annexées). Ainsi, une fois assemblées pour interconnecter deux chaînes, leur épaisseur finale est la même que celle d'un pontet 30 desdites chaînes.

Comme illustré sur les figures 3 et 5 à 8, les languettes de liaison 1 et 2 peuvent en outre être munies de structures interdisant le déplacement transversal relatif de deux languettes de liaison lorsqu'elles sont assemblées.

De nombreuses formes de réalisation peuvent être envisagées dans le cadre de la présente invention. On va décrire par la suite deux formes de réalisation non limitatives.

### Première forme de réalisation

Selon une première forme de réalisation, le dispositif de fixation pour interconnecter deux chaînes est composé d'une languette 1, située à l'extrémité d'une des chaînes et d'une languette 2 située à l'extrémité de l'autre chaîne, lesdites languettes 1 et 2 ayant une forme complémentaire.

Bien évidemment, une chaîne de curseurs selon l'invention comporte de préférence, à une de ses extrémités, une languette de liaison du type de la languette 1, et à l'autre extrémité, une languette de liaison du type de la languette 2. Ainsi toutes les chaînes sont identiques. En variante cependant on peut prévoir une première série de chaînes ayant à chacune de ses deux extrémités une languette de liaison du type de la languette 1 et une deuxième série de chaînes ayant à chacune de ses deux extrémités une languette de liaison du type de la languette 2. Selon encore une autre variante de réalisation les languettes de liaison peuvent être totalement symétriques et hermaphrodites.

Les languettes 1 et 2 comprennent au moins un élément d'attache, à savoir au moins une saillie et autant de cavités. Chaque saillie d'une des languettes 1, 2 est associée à une cavité qui lui est complémentaire et formée dans l'autre languette, de sorte qu'elles se trouvent l'une en face de l'autre lorsque lesdites languettes 1 et 2 sont interconnectées.

De préférence, le moyen d'attache et de fixation ne présente pas de symétrie de révolution, de manière à empêcher les mouvements relatifs de rotation des chaînes interconnectées.

Les cavités s'étendent sur tout ou partie de la hauteur d'une languette, et leur profondeur est au moins égale à la hauteur de la saillie associée.

En outre, les saillies et les cavités sont formées soit sur les surfaces supérieures et inférieures (comme illustré sur les figures 3 à 7) des languettes de liaison, soit sur leurs surfaces latérales (comme illustré sur les figures 8a et 8b).

Par exemple, lorsqu'une cavité est formée dans la surface supérieure d'une des languettes de liaison 1 d'une chaîne, la saillie complémentaire est formée sur la surface inférieure de la languette 2 à laquelle elle doit se raccorder.

Enfin, de préférence la hauteur de la saillie sur la languette 1 et la profondeur de la cavité dans la languette complémentaire 2 sont telles que l'ensemble formé par les deux languettes 1 et 2 assemblées a une épaisseur du même ordre que celle des pontets sécables 30 internes aux chaînes.

La cavité est de préférence un orifice 7, 9 ou une rainure 3, 6 formée dans la languette, par exemple un orifice circulaire, un orifice de section carrée, une gorge rectiligne, courbe ou anguleux, qui s'étend transversalement, longitudinalement ou obliquement sur la languette, etc.

La saillie associée est alors de forme, de dimensions (largeur, longueur et hauteur) complémentaire, de sorte qu'elles sont aptes à s'emboîter mutuellement et empêchent tout mouvement (de rotation ou de translation), par exemple un picot de section ronde, un picot de section carrée, une nervure rectiligne, courbe ou anguleuse, qui s'étend de manière complémentaire à sa nervure associée, etc.

Lorsqu'une languette comprend plusieurs éléments d'attache (parmi les saillies et les cavités), ceux-ci peuvent indifféremment être alignés longitudinalement, transversalement ou obliquement sur ladite languette.

De préférence, on choisit la forme, l'orientation et/ou la combinaison des éléments d'attache (saillies et cavités) de sorte que les mouvements relatifs de translation et de rotation des chaînes interconnectées soient interdits.

C'est notamment le cas lorsqu'un élément d'attache comprend un picot 8, 10 et un orifice 7, 9 de section circulaire (le diamètre intérieur de l'orifice 7, 9 étant égal au diamètre extérieur du picot 8, 10). Les languettes 1 et 2 comprennent alors en outre au moins un deuxième élément d'attache, à savoir au moins une deuxième saillie, et autant de cavités supplémentaires. Par exemple, une même languette comporte deux orifices 7 et 9, ou un picot 10 et un orifice 9.

Ainsi, par emboîtement des picots 8 et 10 dans leurs orifices complémentaires 7 et 9, les deux languettes 1 et 2 constituent un moyen d'interconnexion et de fixation efficace, les éléments d'attache formant au moins deux points d'attache entre les deux chaînes : non seulement ils interdisent tout mouvement relatif de translation (longitudinale et transversale), mais en outre ils empêchent les mouvements relatifs de rotation, en annulant la symétrie de révolution du moyen d'attache constitué de l'élément d'attache unique constitué d'un seul picot et d'un seul orifice.

De même, un élément d'attache constitué par l'association d'une nervure et d'une gorge rectilignes, formés transversalement (respectivement longitudinalement) sur les languettes 1 et 2, n'a pas une symétrie cylindrique de révolution, et interdit donc les mouvements de rotation relative, mais n'est pas apte à interdire les mouvements de translation transversale (respectivement longitudinale) des languettes. On munit donc lesdites languettes 1 et 2 d'au moins un deuxième élément d'attache dont la forme et/ou l'orientation interdit au moins ce mouvement de translation, par exemple un orifice et un picot de section quelconque, des deuxième nervure et gorge non parallèles aux premières nervure et gorge, etc.

Ainsi, on peut par exemple prévoir de former sur une languette 2:
- une gorge courbe ou anguleuse, transversale ou longitudinale,
- une cavité de section carrée, centrée par rapport aux côtés latéraux de la languette, et formée dans la surface supérieure de ladite languette (figure 6),
- deux rainures : transversales, longitudinales ou obliques, sensiblement parallèles ou perpendiculaires, de forme identique ou différente, mais complémentaire de la forme des nervures associées et s'étendant sur la même largeur,
- une gorge rectiligne, de profondeur variable,
- une gorge dont les côtés latéraux ne sont pas parallèles entre eux,
- etc.

L'autre languette 1 comprend alors, respectivement:
- une nervure courbe ou anguleuse, transversale ou longitudinale,
- une saillie de section carrée, centrée par rapport aux côtés latéraux de la languette, et formée dans la surface inférieure de ladite languette,
- deux nervures : transversales, longitudinales ou obliques, sensiblement parallèles ou perpendiculaires, de forme identique ou différente, s'étendant sur tout ou partie de la largeur de la languette,
- une nervure rectiligne, de hauteur variable et complémentaire de la profondeur de la gorge,
- une nervure dont les côtés latéraux ne sont pas parallèles entre eux
- etc.

En référence à la figure 7, nous allons décrire une forme de réalisation particulière.

Une première languette 2 comporte un picot 4 ainsi qu'une nervure transversale 6, de profondeur constante, creusée sur toute la largeur de la languette 2, dont les côtés latéraux ne sont pas nécessairement parallèles. Ils sont disposés longitudinalement sur la languette 2.

La seconde languette 1 (non montrée) complémentaire de la languette 2 comporte alors un orifice circulaire, dont le diamètre intérieur est égal au diamètre extérieur du picot 4, ainsi qu'une nervure transversale qui traverse toute la largeur de la languette 1. La hauteur de la nervure de la languette 1 est égale à la profondeur de la rainure 6, et ses côtés latéraux forment entre eux le même angle que les côtés latéraux de la rainure 6, de telle sorte qu'elles soient complémentaires. L'orifice et la nervure sont disposés longitudinalement sur la languette 1, et séparés par une même distance que le picot et la nervure de la languette 2, de telle sorte que la rainure 6 et le picot puissent être respectivement assemblés avec la nervure et l'orifice lorsque les languettes 1 et 2 sont assemblées.

En variante le picot 4 illustré sur la figure 7 peut être positionné en un autre lieu de la languette, par exemple au fond de la rainure 6, sous réserve d'adapter en conséquence la localisation de l'orifice complémentaire.

De même on a ébauché sur la figure 4a un picot 4bis sur la languette 2 destiné à former en association avec une cavité complémentaire prévue sur la languette 1, un point dur après assemblage, limitant le risque de déplacement relatif transversal des deux chaînes. Bien entendu le positionnement de ce picot 4bis sur la figure 4a n'est pas limitatif.

L'épaisseur de chaque languette 1, 2, la hauteur et la profondeur de chaque élément (picot 4, rainure 6, orifice, nervure) sont tels que l'épaisseur finale du dispositif de liaison assemblé soit de préférence de l'ordre de grandeur de la hauteur d'un pontet sécable interne à la chaîne.

Un homme du métier comprendra bien qu'un tel assemblage mutuel permet d'empêcher tout mouvement relatif de translation longitudinal et transversal, et de rotation des chaînes.

### Deuxième mode de réalisation

Selon une deuxième forme de réalisation, on prévoit d'assurer la liaison des chaines de curseurs, en complément des languettes à complément de forme précitées, par surmoulage des extrémités des chaînes, ledit surmoulage étant effectué de telle sorte que l'épaisseur des zones surmoulées soit la même ou du même ordre de grandeur que l'épaisseur des pontets sécables (30) internes aux chaînes.

Dans le cadre de la présente invention, les bandes de fermeture peuvent être présentées sous toutes formes connues appropriées, par exemple sous forme de bobines ou en vrac.

## Revendications

1. Chaîne de curseurs comprenant une pluralité de curseurs reliés entre eux par des pontets sécables (30), et comprenant à chaque extrémité un dispositif de liaison pour interconnecter l'extrémité de deux chaînes de curseurs pour former une chaîne globale plus longue, **caractérisée en ce que** les dispositifs de liaison sont deux languettes (1, 2) de forme complémentaire, disposées respectivement sur ses extrémités, et comprenant des moyens d'attache non cylindriques de révolution.

2. Chaîne selon la revendication précédente, **caractérisée en ce que** les moyens d'attache empêchent tout mouvement relatif de rotation, de translation longitudinale et/ou de translation transverse des chaînes de curseurs lorsqu'elles sont interconnectées.

3. Chaîne selon l'une des revendications précédentes, **caractérisée en ce que** l'épaisseur totale des moyens d'attache, une fois assemblée, est de l'ordre de celle des pontets sécables (30) internes à une chaîne.

4. Chaîne selon l'une des revendications précédentes, **caractérisée en ce que** les moyens d'attache sont sécables.

5. Chaîne selon l'une des revendications précédentes, **caractérisée en ce que** les moyens d'attache (3 à 10) sont constitués d'au moins un élément d'attache, l'élément d'attache comprenant une saillie (4, 5 8, 10) et une cavité (3, 6, 7, 9).

6. Chaîne selon la revendication précédente, **caractérisée en ce qu'**une saillie (4, 5, 8, 10) est formée sur l'une des extrémités (1, 2), et qu'elle est complémentaire d'une cavité (3, 6, 7, 9), formée dans l'autre extrémité(1, 2).

7. Chaîne selon l'une quelconque des revendications 5 au 6, **caractérisée en ce que** la saillie (4, 5, 8, 10) et la cavité (3, 6, 7, 9) associées sont de forme et de dimensions complémentaires, de sorte qu'elles sont aptes à s'emboîter mutuellement.

8. Chaîne selon l'une des revendications 1 à 7, **caractérisée en ce qu'**elle comprend un moyen d'attache comportant une saillie (4, 5, 8, 10) choisie dans le groupe comprenant :
• un picot de section ronde,
• un picot de section carrée,
• une nervure rectiligne,
• une nervure courbe,
• une nervure anguleuse,
et une cavité (3, 6, 7, 9) complémentaire choisie dans le groupe comprenant :
• un orifice circulaire,
• un orifice de section carrée,
• une gorge rectiligne,
• une gorge courbe,
• une gorge anguleuse.

9. Chaîne selon l'une des revendications précédentes, **caractérisée en ce qu'**elle est réalisée par injection moulage en matière plastique, notamment du type Polyoxyméthylène ou en polyolèfines, tel que polyéthylène haute et basse densité ou polypropylène.

10. Chaîne selon l'une des revendications 1 à 9, **caractérisée en ce que** le moyen d'attache est réalisé par surmoulage en matière plastique, notamment du type Polyoxyméthylène ou en polyolèfines, tel que polyéthylène haute et basse densité ou polypropylène, des extrémités des chaînes de curseur à interconnecter.

11. Ensemble de chaînes de curseurs, notamment sous forme de bobine, **caractérisé en ce qu'**il comprend une pluralité de chaînes de curseurs interconnectées entre elles à l'aide de moyens d'attache selon l'une des revendications 1 à 10.

## Claims

1. Slider chain including a plurality of sliders joined together by divisible bridging pieces (30), and including a linking means at each end to interconnect the ends of two slider chains in order to form a longer chain overall, **characterised in that** the linking means comprise two tabs (1, 2) of complementary shape, arranged respectively at the ends of the chain, and including attachment means which are not of cylindrical revolution.

2. Chain according to the preceding claim, **characterised in that** the attachment means prevent any relative movement in rotation, in longitudinal translation and/or transverse translation of the slider chains when they are interconnected.

3. Chain according to any one of the preceding claims, **characterised in that** the total thickness of the attachment means, once assembled, is of the order of that of the divisible bridging pieces (30) within a chain.

4. Chain according to any one of the preceding claims, **characterised in that** the attachment means are divisible.

5. Chain according to anyone of the preceding claims, **characterised in that** the attachment means (3 to 10) are composed of at least one attachment element, wherein the attachment element includes a projection (4, 5, 8, 10) and a cavity (3, 6, 7, 9).

6. Chain according to the preceding claim, **characterised in that** a projection (4, 5, 8, 10) is formed at one of the ends (1, 2), and that said projection is complementary to a cavity (3, 6, 7, 9) formed at the other end (1, 2).

7. Chain according to any one of claims 5 or 6, **characterised in that** the projection (4, 5, 8, 10) and the associated cavity (3, 6, 7, 9) are of complementary shape and dimensions, so that they are suitable to mutually interlock.

8. Chain according to any one of claims 1 to 7, **characterised** includes a means of attachment with a projection (4, 5, 8, 10) chosen (5) from the following group:
- a pin of round section,
- a pin of square section,
- a rectilinear rib,
- a curved rib,
- an angled rib,
and a complementary cavity (3, 6, 7, 9) chosen from the following group:
- a circular orifice,
- an orifice of square section,
- a rectilinear channel,
- a curved channel,
- an angled channel.

9. Chain according to any of the preceding claims, **characterised in that** it is created by injection moulding in a plastic material, in particular of the polyoxymethylene or polyolefins type, such as high and low density polyethylene or polypropylene.

10. Chain according to any of claims 1 to 9, **characterised in that** the means of attachment is created by overmoulding in a plastic material, in particular of the polyoxymethylene or polyolefins type, such as high and low density polyethylene or polypropylene, on the ends of the slider chains to be interconnected.

11. Collection of slider chains, in particular in the form of a spool, **characterised in that** it includes a plurality of slider chains that are connected together using attachment means according to any of claims 1 to 10.

## Patentansprüche

1. Schieberkette, die mehrere über teilbare Brücken (30) miteinander verbundene Schieber aufweist und an jedem Ende eine Verbindungsvorrichtung aufweist, um das Ende von zwei Schieberketten zu verbinden, um eine längere Gesamtkette zu bilden, **dadurch gekennzeichnet, dass** die Verbindungsvorrichtungen zwei Zungen komplementärer Form sind, die jeweils an den Enden der Kette angeordnet sind und nicht-rotationszylindrische Befestigungsmittel aufweisen.

2. Kette nach dem vorstehenden Anspruch, **dadurch gekennzeichnet, dass** die Befestigungsmittel jegliche relative Rotationsbewegung, Translationsbewegung in Längsrichtung und/oder Translationsbewegung in Querrichtung der Schieberketten verhindern, wenn sie miteinander verbunden sind.

3. Kette nach einem der vorstehenden Ansprüche, **dadurch gekennzeichnet, dass** die Gesamtdicke der Befestigungsmittel, wenn sie zusammengefügt sind, in der Größenordnung derjenigen von teilbaren Brücken (30) im Innern einer Kette ist.

4. Kette nach einem der vorstehenden Ansprüche, **dadurch gekennzeichnet, dass** die Befestigungsmittel teilbar sind.

5. Kette nach einem der vorstehenden Ansprüche, **dadurch gekennzeichnet, dass** die Befestigungsmittel (3 bis 10) aus mindestens einem Befestigungselement gebildet sind, wobei das Befestigungselement einen Vorsprung (4,5,8,10) und einen Hohlraum (3,6,7,9) aufweist.

6. Kette nach dem vorstehenden Anspruch, **dadurch gekennzeichnet, dass** ein Vorsprung (4,5,8,10) an einem der Enden (1,2) gebildet ist, und dadurch, dass er komplementär zu einem in dem anderen Ende (1,2) gebildeten Hohlraum (3,6,7,9) ist.

7. Kette nach einem der Ansprüche 5 oder 6, **dadurch gekennzeichnet, dass** der Vorsprung (4,5,8,10) und der zugehörige Hohlraum (3,6,7,9) von komplementärer Form und Abmessung sind, so dass sie ineinander gefügt werden können.

8. Kette nach einem der Ansprüche 1 bis 7, **dadurch gekennzeichnet, dass** sie ein Befestigungselement aufweist, das einen aus der folgenden Gruppe ausgewählten Vorsprung (4,5,8,10) aufweist:
• ein Zahn mit rundem Querschnitt,
• ein Zahn mit rechteckigem Querschnitt,
• eine geradlinige Rippe,
• eine krummlinige Rippe,
• eine winkelige Rippe,
und einen aus der folgenden Gruppe ausgewählten komplementären Hohlraum (3,6,7,9) aufweist:
• eine kreisförmige Öffnung,
• eine Öffnung mit rechteckigem Querschnitt,
• eine geradlinige Auskehlung,
• eine krummlinige Auskehlung,
• eine winkelige Auskehlung.

9. Kette nach einem der vorstehenden Ansprüche, **dadurch gekennzeichnet, dass** sie durch Kunststoff-Spritzguss, insbesondere Kunststoff des Typs Polyoxymethylen oder Polyolefin, beispielsweise Polyethylen hoher und niedriger Dichte oder Polypropylen, hergestellt ist.

10. Kette nach einem der Ansprüche 1 bis 9, **dadurch gekennzeichnet, dass** die Befestigungsmittel durch Kunststoff-Überformen der Enden der zu verbindenden Schieberketten, insbesondere Kunststoff des Typs Polyoxymethylen oder Polyolefin, beispielsweise Polyethylen hoher und niedriger Dichte oder Polypropylen, hergestellt sind.

11. Satz von Schieberketten, insbesondere in Rollenform, **dadurch gekennzeichnet, dass** er mehrere mit Hilfe von Befestigungsmitteln miteinander verbundene Schieberketten nach einem der Ansprüche 1 bis 10 aufweist.
